# EUROPÄISCHE PATENTSCHRIFT

(11) **EP 0 882 566 B1**
(45) Veröffentlichungstag und Bekanntmachung des Hinweises auf die Patenterteilung: **19.09.2001**
(21) Anmeldenummer: 98110099.3
(22) Anmeldetag: 03.06.1998
(51) Int. Cl.: B29C 51/26

(54) **Verstellbarer Spannrahmen für die Formstation einer Thermoformmaschine**
Adjustable clamping frame for the moulding stations of a thermoforming machine
Cadre de fixation ajustable pour le poste de moulage d'une machine de thermoformage

(30) Priorität: 05.06.1997 DE 19723561
(43) Veröffentlichungstag der Anmeldung: 09.12.1998
(73) Patentinhaber: Adolf Illig Maschinenbau GmbH & Co, D-74081 Heilbronn (DE)
(72) Erfinder: Schwarzmann, Peter, 74081 Heilbronn (DE)

(56) Entgegenhaltungen:
- EP-A- 0 623 449
- EP-A- 0 692 365
- AT-B- 223 371
- DE-C- 19 536 867
- US-A- 5 167 969

## Beschreibung

Die Erfindung betrifft einen verstellbaren Spannrahmen für die Formstation einer Thermoformmaschine, mit der erwärmte Platten aus thermoplastischem Kunststoff durch Differenzdruck mittels einer Form verformt werden, nach der Gattung des Hauptanspruches. Solche Formstationen weisen in der Regel einen geschlossenen Blaskasten auf, an dessen Oberseite ein fester Spannrahmen sitzt, der im Zusammenwirken mit einem höhenbeweglichen Oberrahmen die Platte einspannt. Um die Formstation für verschiedene Größen von Formteilen und damit Plattenzuschnitten verwenden zu können, ist es bekannt, den festen Spannrahmen stufenlos verstellbar zu gestalten (DE 44 24 845 C 2), in dem er aus vier Platten besteht, die zueinander verschoben werden können. Je nach Verschiebung dieser Platten entsteht ein größeres oder kleineres Fenster.

Nachteilig bei dieser Ausführung des Spannrahmens ist es, daß er nicht bei Thermoformmaschinen eingesetzt werden kann, deren Formstation für eine automatische Beschickung mit Platten und/oder für das Entnehmen von Formteilen über eine Transporteinrichtung vorgesehen ist. Diese Transporteinrichtung hat eine gewisse Bauhöhe und transportiert die Kunststoffplatte in einem gewissen Abstand von der Oberfläche der Blaskastenabdeckung. Der Plattenrand muß an zwei Längskanten ergriffen werden können.

Der Erfindung lag die Aufgabe zugrunde, einen stufenlos verstellbaren Spannrahmen so auszubilden, daß er für eine automatische Zufuhr von Platten und/oder für einen automatischen Austransport der Formteile verwendet werden kann. Er sollte dabei eine hohe Stabilität aufweisen und eine einfache Montage von Hochhaltern für die Platte ermöglichen. Es sollten wahlweise starre Querstege oder teleskopartig verschiebbare Querstege eingesetzt werden können.

Zur Lösung der Aufgabe werden die kennzeichnenden Merkmale des Hauptanspruches vorgeschlagen. Hinsichtlich vorteilhafter Weiterbildungen wird auf die Unteransprüche verwiesen.

Der Gegenstand der Erfindung wird nachfolgend anhand der schematischen Zeichnungen näher beschrieben. Es zeigt:
- Figur 1 -: eine perspektifische Ansicht von Blaskasten und festem Spannrahmen

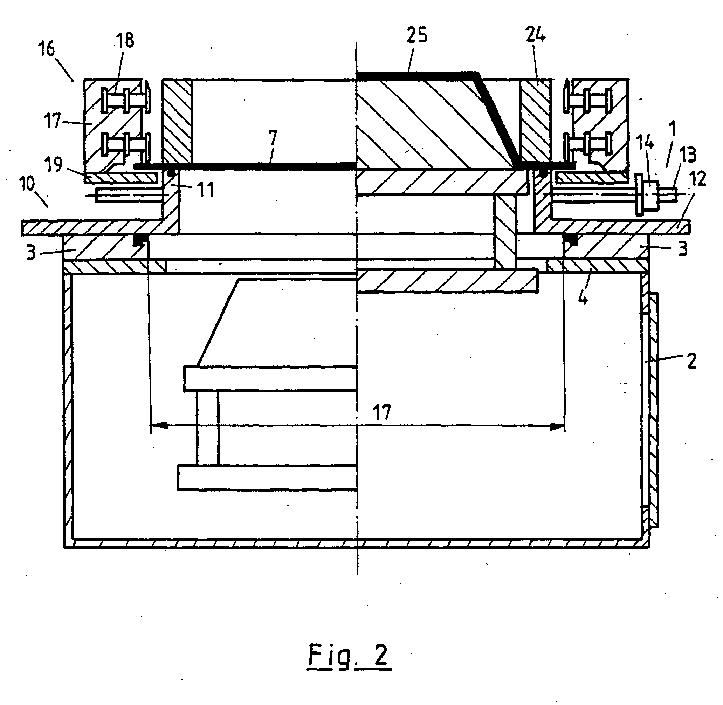

- Figur 2 -: einen Querschnitt durch den Spannrahmen einschließlich Blaskasten und Formtisch der Formstation
- Figur 3 -: einen Längsschnitt (Ausschnitt) durch Spannrahmen und Blaskasten
- Figur 4 -: eine Teildraufsicht auf den Spannrahmen gemäß einer Variation.

Der Spannrahmen 1 deckt den Blaskasten 2 in der Formstation einer Thermoformmaschine ab. Er besteht aus zwei fest am Bord 4 des Blaskastens 2 im Abstand A angebrachten Platten 3, die sich über die ganze Länge des Blaskastens 2 erstrekken. Zwischen den Platten 3 verlaufen zwei Platten 5, die relativ zueinander und zu den Platten 3 verschiebbar ausgebildet sind. Sie liegen auf gleicher Höhe wie die Platten 3 und sind zu diesen geführt.

Auf den beiden starren Platten 3 sitzt je ein winkelförmiger Längssteg 10, der sich mit dem einen Schenkel 12 auf der Platte 3 abstützt, der zweite Schenkel 11 ragt nach oben und bildet mit der Oberkante die Auflage für die Kunststoffplatte 7. Beide Längsstege 10 können zueinander über zwei Gewindespindeln 13 mit Rechts/Linksgewinde von Hand oder über einen Motor 22 verstellt werden. Sie sind vorzugsweise mit einer Gleichlaufeinrichtung versehen, bestehend aus zwei Kettenrädern 14 und einer Rollenkette 15.

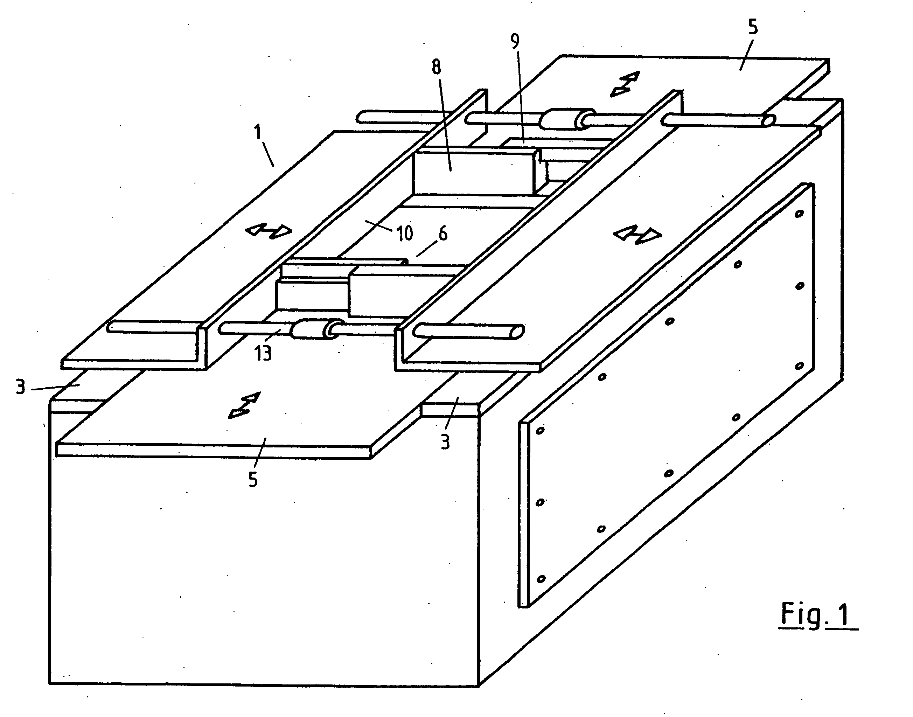

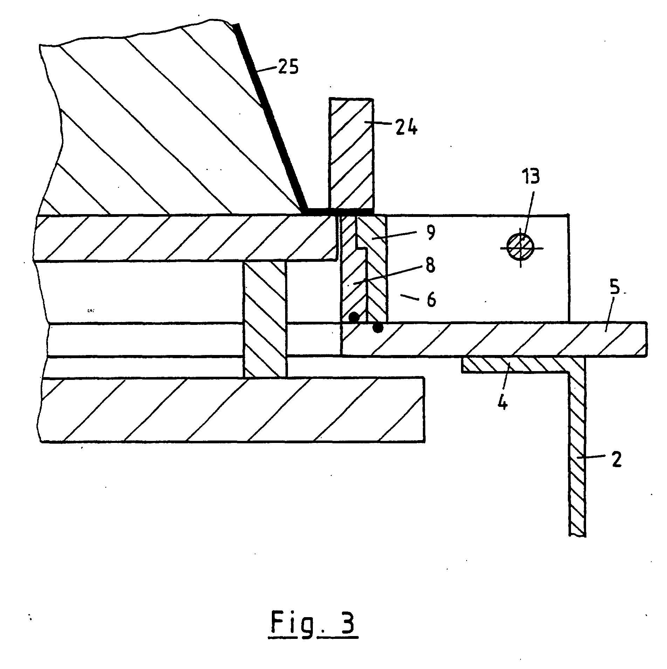

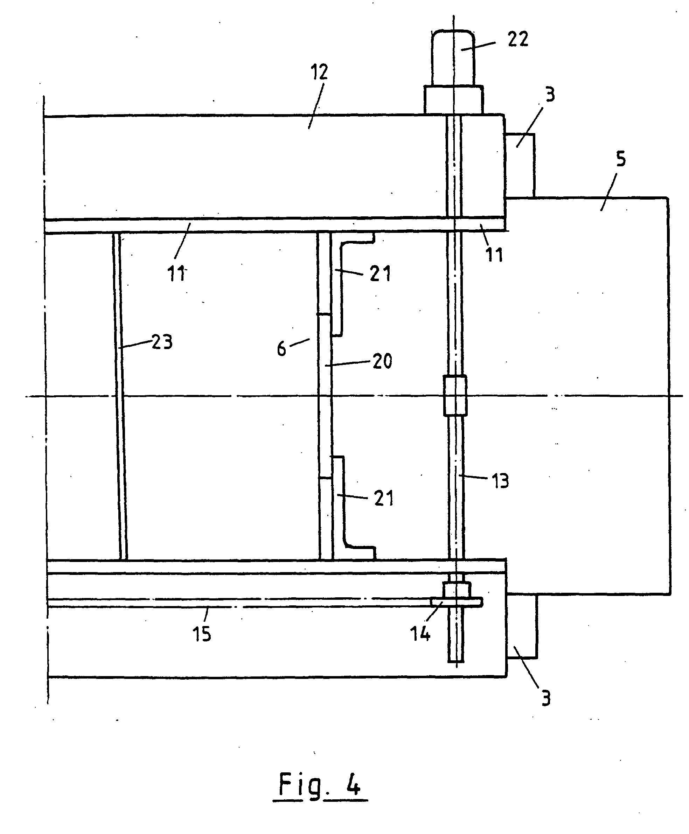

Zwischen den beiden Längsstegen 10 sitzen zwei Querstege 6. In einfachster Ausführung sind diese starr als ein Teil ausgebildet und werden an den Längsstegen 10 befestigt. Pro Größe der Platte 7 in Querrichtung wird ein Satz Querstege 6 benötigt. Universeller ist es, die Querstege 6 wie in den Figuren 1 und 3 dargestellt, teleskopartig auszubilden in Form von zwei Querstegen 8, 9. Eine dritte Lösung ist in Figur 4 dargestellt. An jeder Platte 5 sitzt mittig ein starrer Steg 20, an jedem Schenkel 11 sitzt ein Steg 21. Die Stege 20, 21 arbeiten ebenfalls teleskopartig zusammen und können einen bestimmten Breitenbereich überbrücken. Die Oberkante der Querstege 6 und die Oberkante der Schenkel 11 der Längsstege 10 liegen auf gleicher Höhe und tragen die Kunststoffplatte 7, die im Zusammenwirken mit einem höhenverstellbaren Rahmen 24 eingespannt wird.

Die Kunststoffplatte 7 wird von der Seite her über ein Transportsystem 16 herangeführt, bestehend aus zwei Führungsleisten 17 und je einer umlaufenden Transportkette 18 mit Spitzlaschen sowie Auflagenleisten 19. Dieses Transportsystem übernimmt auch den Austransport der Formteile 25 nach ihrer Herstellung.

Falls erforderlich, können in einfacher Weise zwischen den Längsholmen 10 oder zwischen den starren Stegen 20 Hochhalter in Form von Stegen oder Drähten 23 quer bzw. längs angebracht werden, um die erwärmte und zum Durchhängen neigende Kunststoffplatte 7 abzustützen.

## Patentansprüche

1. Verstellbare Spannrahmen für die Formstation einer Thermoformmaschine zur Verformung von erwärmten Platten (7) aus thermoplastischem Kunststoff, bestehend aus vier einzelnen Platten, **gekennzeichnet durch** folgende Merkmale:
a) zwei Platten (3) sind starr auf Abstand (A) am Blaskasten (2) der Formmaschine befestigt;
b) zwei Platten (5) sind zwischen den Platten (3) verschiebbar und auf gleicher Höhe angeordnet;
c) auf den starren Platten (3) sitzt je ein Längsholm (10);
d) beide Längsholme (10) sind zueinander verschiebbar ausgebildet;
e) zwischen den beiden Längsholmen sitzen Querholme (6), wobei die Oberkante (6) und die Oberkante der Längsholme (10) eine Ebene zur Auflage der einzuspannenden Kunststoffplatte (7) bilden.

2. Spannrahmen nach Anspruch 1 **dadurch gekennzeichnet, daß** zur Verstellung der beiden Längsstege (10) zwei Gewindespindeln (13) vorgesehen sind.

3. Spannrahmen nach Anspruch 2 **dadurch gekennzeichnet, daß** die beiden Gewindespindeln (13) über eine Gleichlaufeinrichtung (14, 15) verbunden sind.

4. Spannrahmen nach Anspruch 3 **dadurch gekennzeichnet, daß** eine Gewindespindel (13) mit einem Motor (22) in Verbindung steht.

5. Spannrahmen nach einem der Ansprüche 1 bis 4 **dadurch gekennzeichnet, daß** die Querstege (6) von einem starren Steg gebildet werden, der an den beiden Längsstegen (10) befestigt ist.

6. Spannrahmen nach einem der Ansprüche 1 bis 4 **dadurch gekennzeichnet, daß** der Quersteg (6) von zwei Stegen (8, 9) teleskopartig gebildet wird, die am Längssteg (10) befestigt sind.

7. Spannrahmen nach einem der Ansprüche 1 bis 4 **dadurch gekennzeichnet, daß** der Quersteg (6) von insgesamt drei Stegen (20, 21) gebildet wird, wobei ein Steg (20) starr an der Platte (5) mittig befestigt ist, die beiden anderen Stege (21) am Längssteg (10) sitzen.

## Claims

1. Adjustable clamping frame for the moulding station of a thermomoulding machine for deforming heated plates (7) of thermoplastic synthetic material, consisting of four individual plates, **characterised by** the following features:
a) two plates (3) are rigidly fastened to the blow boxes (2) of the moulding machine at a spacing (A);
b) two plates (5) are arranged to be displaceable between the plates (3) and at the same height;
c) a respective longitudinal beam (10) is seated on each rigid plate (3);
d) the two longitudinal beams (10) are constructed to be displaceable relative to one another; and
e) transverse beams (6) are seated between the two longitudinal beams, wherein the upper edge (6) and the upper edge of the longitudinal beam (10) form a plane for support of the synthetic material plate (7) to be clamped in place.

2. Clamping frame according to claim 1, **characterised in that** two threaded spindles (13) are provided for adjustment of the two longitudinal webs (10).

3. Clamping frame according to claim 2, **characterised in that** the two threaded spindles (13) are connected by way of a synchronising device (14, 15).

4. Clamping frame according to claim 3, **characterised in that** one threaded spindle (13) is connected with a motor (22).

5. Clamping frame according to one of claims 1 to 4, **characterised in that** the transverse web (6) is formed by a rigid web, which is fastened to the two longitudinal webs (10).

6. Clamping frame according to one of claims 1 to 4, **characterised in that** the transverse web (6) is formed in telescopic manner by two webs (8, 9), which are fastened to the longitudinal web (10).

7. Clamping frame according to one of claims 1 to 4, **characterised in that** the transverse web (6) is formed a total of three webs (20, 21), wherein one web (20) is rigidly fastened centrally to the plate (5) and the two other webs (21) are seated at the longitudinal web (10).

## Revendications

1. Cadre de serrage ajustable pour le poste de moulage d'une machine de thermoformage pour mouler des plaques (7), réchauffées, en matière thermoplastique, comprenant quatre plaques distinctes,
**caractérisé en ce que**
a) deux plaques (3) sont fixées de manière rigide à l'intervalle (A) sur le caisson de soufflage (2) de la machine de formage,
b) deux plaques (5) sont coulissantes entre les plaques (3) et sont situées à la même hauteur,
c) les plaques rigides (3) comportent chacune un longeron (10),
d) les deux longerons (10) sont coulissants l'un par rapport à l'autre,
e) entre les deux longerons se trouvent des traverses (6), l'arête supérieure des traverses (6) et l'arête supérieure des longerons (10) formant un plan pour recevoir la plaque de matière plastique (7) à fixer.

2. Cadre de fixation selon la revendication 1,
**caractérisé par**
deux broches filetées (13) pour ajuster les deux longerons (10).

3. Cadre de fixation selon la revendication 2,
**caractérisé en ce que**
les deux broches filetées (13) sont reliées par une installation de synchronisation (14, 15).

4. Cadre de fixation selon la revendication 3,
**caractérisé en ce qu'**
une broche filetée (13) est reliée à un moteur (22).

5. Cadre selon l'une quelconque des revendications 1 à 4,
**caractérisé en ce que**
la traverse (6) est formée par une entretoise rigide fixée aux deux longerons (10).

6. Cadre selon l'une quelconque des revendications 1 à 4,
**caractérisé en ce que**
la traverse (6) est formée par deux entretoises télescopiques (8, 9), fixées au longeron (10).

7. Cadre selon l'une quelconque des revendications 1 à 4,
**caractérisé en ce que**
la traverse (6) est formée en tout par trois entretoises (20, 21), une entretoise (20) étant fixée rigidement en son milieu à la plaque (5), et les deux autres entretoises (21) étant portées par le longeron (10).
